# DEMANDE DE BREVET EUROPEEN

(11) **EP 1 074 441 A1**
(43) Date de publication de la demande: **07.02.2001**
(21) Numéro de dépôt: 00480031.4
(22) Date de dépôt: 28.03.2000
(51) Int. Cl.: B60R 25/04, B60R 25/10

(54) **Procédé de commande à distance d'un processus**

(30) Priorité: 02.08.1999 FR 9910221
(71) Demandeur: Omega Conception et Systéme, S.A.R.L., 26000 Valence (FR)
(72) Inventeur: Baldenweck, Philippe, 07130 St. Peray (FR)
(74) Mandataire: Schuffenecker, Thierry

(57) **Abrégé**

Dispositif de commande à distance d'un processus une unité de traitement qui communique avec un système récepteur de radiodiffusion afin de recevoir des informations de commandes reçues à distance d'un serveur informatique. L'unité de traitement communique en outre avec un récepteur de type Global Positioning System (GPS) qui produit une information de localisation qui est générée localement. D'autres informations peuvent être générées localement par d'autres capteurs ou détecteurs: détecteur de contact, capteurs de fonctionnement de certains organes électriques ou mécaniques. L'unité de traitement effectue un traitement sur les informations reçues à distance via le réseau de radiodiffusion et les combine avec celles que produit le récepteur GPS afin de générer des signaux de commandes destinées à provoquer certaines actions, telles que l'activation d'un ou plusieurs organes de coupure. L'invention est particulièrement adaptée à l'emploi du récepteur pager de type ERMES ou Flex, ou encore le canal SMS du réseau cellulaire mobile.

## Description

### Domaine technique de l'invention

La présente invention concerne la commande automatique à distance de processus et plus spécialement un procédé de commande à distance d'organes fonctionnels dans un véhicule ou matériel mobile.

### Etat de la technique

De nombreux dispositifs utilisent les informations radios pour commander des processus industriels. Des normes ont été élaborées pour définir la structure des réseaux et des données circulant sur ces réseaux de radiocommunication. A chacun de ces réseaux, bon nombre de récepteurs ont été développés pour répondre à ces contraintes de radio diffusion.

Le brevet américain US 5,661,468 intitulé « *radio paging electrical load control system and device »* décrit la commande, à distance, du signal de radiodiffusion de type « pager » destiné à la commande centralisée du système d'éclairage d'un immeuble, afin notamment de réduire la consommation électrique dans cet immeuble.

Des dispositifs utilisant les ondes radio sont par ailleurs utilisés pour répondre à l'augmentation du nombre des effractions et des vols de véhicules (principalement des voitures de tourisme). Ces dispositifs permettent d'empêcher ou au moins de retarder le vol du véhicule à partir d'un signal radio de proximité émis par un émetteur à déclenchement manuel, généralement détenu par l'utilisateur du véhicule.

Des dispositifs similaires, mais fonctionnant de manière passive ont aussi vu le jour. Ces dispositifs sont activés automatiquement dès l'arrêt du véhicule, et ne peuvent être désactivés qu'après reconnaissance d'un code fourni par l'utilisateur du véhicule par l'intermédiaire d'un clavier intégré au véhicule ou d'un signal radio de proximité émis par un émetteur à déclenchement manuel détenu par ce même utilisateur.

La demande de brevet européen EP-A- 505 266 intitulée « *système de mise hors service contrôlée et de localisation d'un équipement meuble ou mobile »* décrit un exemple de l'utilisation d'ondes radio, reçues par des récepteurs/décodeurs, pour permettre l'inhibition à distance d'un équipement ou d'un véhicule.

La demande de brevet européen n° EP-A- 0 799 753 intitulée « *Verfahren und Einrichtung zum Wiederauffinden von Fahrzeugen »* décrit un dispositif anti-effraction de véhicule basé sur l'émission d'ondes satellites, mais également pager ou le canal de données d'un modem GSM.

Le brevet américain US 5,588,038 intitulée « *System and method for signaling a device at a remote location over a wireless network »* montre un autre exemple d'un système de commande de processus basé sur une émission d'ondes radio transmises par satellite.

La demande de brevet française n° 2,773,756, intitulée « *dispositif pour activer ou désactiver à distance des moyens de commande d'un engin et son procédé de mise en oeuvre »,* porte sur un dispositif utilisant un récepteur de fréquence et des moyens d'activation et de désactivation à distance permettant à des organismes de crédit ou de location de contrôler l'usage de l'engin ou du matériel.

La demande de brevet internationale n° PCT/FR99/02292 intitulée « *procédé et dispositif d'activation ou de contrôle de processus automatique ou semi-automatique à distance »,* non publiée à la date de dépôt de la présente demande et déposée par le titulaire de la présente demande de brevet, concerne l'utilisation du réseau Pager de type ERMES ou FLEX afin de commander à distance des fonctions d'un véhicule ou appareillage.

Bien que les dispositifs décrits apportent une réponse au problème de commande à distance d'un véhicule ou d'un matériel mobile, ils se révèlent dans la plupart des cas complexes et coûteux à mettre en oeuvre.

En outre, il est souhaitable d'accroître en toutes circonstances l'emprise du propriétaire légitime sur le véhicule ou le matériel mobile.

La présente invention a pour objet de remédier à ces problèmes et d'apporter un perfectionnement économique aux dispositifs et techniques connues.

### Résumé de l'invention

L'objet de la présente invention consiste élaborer un système de communication efficace et peu coûteux qui permet d'accroître l'emprise à distance sur tout véhicule, bateau ou matériel mobile, et en toutes conditions.

Un autre objet de la présente invention est de fournir un procédé et dispositif de commande à distance qui permet de traiter tant des informations de commande reçues par voie de radiodiffusion que des informations produites localement, notamment générées par un récepteur de type *Global Positioning System* (GPS).

La présente invention a pour objet de fournir un dispositif de commande à distance d'un processus industriel qui est spécialement adapté aux réseaux existants FLEX, ERMES ou GSM.

Pour atteindre ces objectifs, l'invention comporte une unité de traitement qui communique avec un système récepteur de radiodiffusion afin de recevoir des informations de commande reçues à distance d'un serveur informatique. L'unité de traitement communique en outre avec un récepteur de type Global Positioning System (GPS), laquelle fournit en local une information de localisation. D'autres informations peuvent être générées localement par l'intermédiaire de capteurs ou détecteurs spécifiques, tels que détecteurs de contact, détecteur kilométrique, capteurs de vitesse ou de fonctionnement de certains organes électriques ou mécaniques. L'unité de traitement effectue un traitement de ces informations, tant celles extraites des messages de commande reçues à distance par le réseau de radiodiffusion que celles produites localement par le récepteur GPS, afin de générer des signaux de commandes destinés à provoquer certaines actions prédéfinies, telles que l'activation d'un ou plusieurs organes de coupure.

Ainsi l'unité de traitement peut traiter simultanément les informations de localisation avec des informations fournies dans des messages reçus par le réseau pour influer, automatiquement, le comportement des organes fonctionnels du véhicule ou du matériel mobile.

Dans un mode de réalisation particulier, l'unité de traitement coopère avec un récepteur pager, de type FLEX ou ERMES, recevant à intervalle régulier un signal radio diffusé sur tout un territoire et comportant un ensemble de messages qui sont assemblés et cryptés. Le récepteur pager comporte un circuit de décodage qui permet d'extraire et de décrypter un message de commande particulier qui lui est destiné et qui est ensuite transmis à l'unité de traitement du véhicule ou du matériel mobile.

Dans un mode de réalisation particulier, le message de commande qui est reçue par l'unité de traitement via le réseau pager comporte des informations définissant un numéro d'ordre attribué au message, un code définissant l'action à effectuer, un code déterminant la date et l'heure de début de programmation de ladite action, un code déterminant la date et l'heure de fin de programmation de cette dernière.

Dans un mode de réalisation particulier l'unité de traitement met en oeuvre un procédé de déblocage automatique des organes fonctionnels du véhicule en cas de réception dégradée du signal radio.

Dans un mode de réalisation particulier, le système d'évaluation des conditions de déblocage automatique des fonctions du véhicule ou du matériel mobile, utilise une information reçue dans la trame qui définit un ratio FLEX/ERMES définissant le rapport relatif d'envoi des trames FLEX ou ERMES. Le dispositif est alors capable de s'adapter automatiquement à une grande variété de conditions d'émission sur le territoire. Dans un mode spécifique, le traitement de la mesure de la qualité de réception par l'unité de traitement comporte une intégration temporelle d'une valeur représentative de la qualité du signal fournie par le récepteur, suivie d'une pondération qui est effectuée à partir de la valeur du ratio FLEX/ERMES transmise dans la trame convoyée par le réseau.

Dans un mode de réalisation particulier dans lequel le dispositif est utilisé pour contrôler l'usage d'un véhicule, le format de la trame reçue par le réseau pager comporte une information décodée par l'unité de traitement pour commander le blocage des fonctions ou organes du véhicule dès que le moteur est arrêté, optionnellement avec d'autres effets tels que lumineux ou sonores.

Dans un mode de réalisation préféré, l'unité de traitement coopère avec un modem cellulaire de type GSM, lequel est configuré de manière à permettre la transmission et l'émission de messages de service de type Short Message Service (SMS), qui est d'ordinairement utilisé pour convoyer les informations de signalisation des téléphones cellulaires. Les messages SMS se voient ainsi conférer une fonction de transport des informations de commande à distance du processus automatique, et ce à un très faible coût. L'unité de traitement devient non seulement capable de traiter simultanément les informations reçues à distance par la voie de service SMS, en combinaison avec les informations de localisation fournies par le récepteur GPS, mais également de transmettre en retour, à distance, des informations au système informatique.

Dans un mode de réalisation préféré, le message de commande qui est reçue par l'unité de traitement via la voie de service SMS comporte des informations définissant un numéro d'ordre attribué au message, un code de l'action à effectuer, un code déterminant la date et l'heure de début de l'action, un code déterminant la date et l'heure de fin de programmation de l'action.

Préférentiellement le dispositif est utilisé pour contrôler l'usage d'un véhicule, le format de la trame reçue par la voie de service SMS comporte une information décodée par l'unité de traitement pour commander le blocage des fonctions ou organes du véhicule dès que le moteur est arrêté, optionnellement avec d'autres effets tels que lumineux ou sonores.

D'une manière préférée, l'unité reçoit du modem GSM une valeur de la mesure de la qualité de réception du signal radio, et effectue un traitement d'intégration de cette valeur de façon à produire une valeur moyennée. Dès que cette valeur descend en dessous d'un seuil prédéfini, l'unité de traitement déclenche le déblocage automatique des fonctions ou organes du véhicule.

Alternativement, l'invention a pour but de permettre la réalisation d'un dispositif de commande à distance d'un processus automatique ou semi-automatique utilisant un réseau de transmission/diffusion particulièrement commode et à faible coût. A cet effet, l'invention comporte une unité de traitement communiquant avec un modem cellulaire conforme à la norme GSM. Contrairement aux dispositifs classiques, la transmission et la réception d'informations de commande qui sont transmises et reçues par l'unité de commande n'emploie pas le canal de données du réseau GSM, coûteux à mettre en oeuvre, mais le canal de service dit Short Message Service (SMS) qui est utilisé habituellement pour convoyer les informations de signalisation entre les téléphones cellulaires ou les messages de texte qui sont affichés sur l'écran à cristaux liquides de ces mêmes téléphones.

L'invention utilise avantageusement ce canal de service particulièrement économique pour assurer la commande à distance de tout processus industriel, et notamment, l'activation d'organes fonctionnels divers, dans des photocopieurs ou matériels mobiles divers, mais également la commande de dispositif anti-effraction des véhicules ou de bateau, et même directement utilisables pour un dispositif d'anti-effraction d'immeubles. Bien que cela ne soit pas nécessaire, ce dispositif peut fort avantageusement être couplé à un récepteur optionnel de type GPS de manière à accroître l'emprise du propriétaire légitime en assurant le report des informations de localisation via le canal de service SMS vers un serveur de traitement automatique.

### Description des dessins

La figure 1 montre le schéma synoptique d'un dispositif de commande à distance utilisant des messages reçus par radiodiffusion avec des informations produites localement, telle que générées par un récepteur GPS.

La figure 2 montre le schéma de principe du dispositif de commande à distance permettant le traitement d'informations reçues via le réseau avec des informations de localisation fournies par un récepteur GPS.

Les figures 3A et 3B illustrent respectivement un mode de réalisation basé sur un récepteur de type pager, et la structure de la trame extraite du signal radio qui permettra de générer le message de commande.

La figure 4 illustre le procédé permettant la communication de l'unité de traitement avec le récepteur GPS 23 et le traitement des informations de localisation au sein de cette unité.

La figure 5 montre un exemple de découpage de zones géographiques permettant de verrouiller ou bloquer le véhicule dans certaines zones déterminées.

La figure 6 montre un exemple de protocole permettant à un utilisateur de commander à distance le verouillage d'un organe fonctionnel dans son véhicule.

La figure 7 illustre un second mode de réalisation particulier dans lequel les messages sont transmis via la couche SMS des réseaux cellulaires.

La figure 8 montre une application du dispositif de commande de processus à des fins de domotique, pour la commande d'une charge et le contrôle de sa bonne mise en oeuvre.

La figure 9 illustre un dispositif de commande de processus qui peut être utilisé à des fins domotiques

### Description des modes de réalisation préférés.

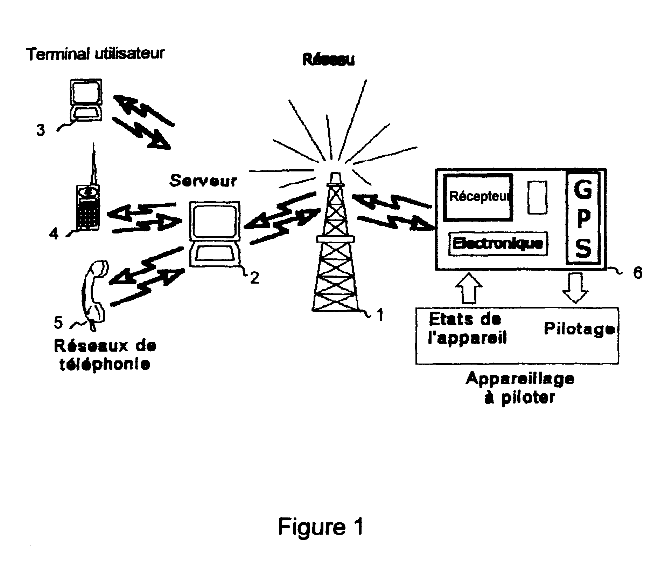

La figure 1 montre le schéma de principe d'un dispositif de commande à distance permettant de traiter simultanément des messages reçus par radiodiffusion avec des informations qui sont produites localement, telle que générées par un récepteur GPS. Le dispositif est destiné à permettre le contrôle de l'usage d'un véhicule ou un matériel mobile, tel que photocopieurs, dispositifs électroniques complexes et coûteux. Les informations de commande à distance sont reçues d'un serveur informatique 2 via un réseau 1 et sont combinées avec des informations, notamment de localisation qui sont produites par le récepteur GPS. Le serveur 2 est accessible par différents types de réseaux, téléphoniques ou de télécommunications. Par exemple, un utilisateur peut se connecter au moyen du réseau Internet au serveur 2 via un terminal d'ordinateur 3, mais également via un téléphone cellulaire 4 ou le classique téléphone 5 du Réseau Téléphonique Commuté (RTC).

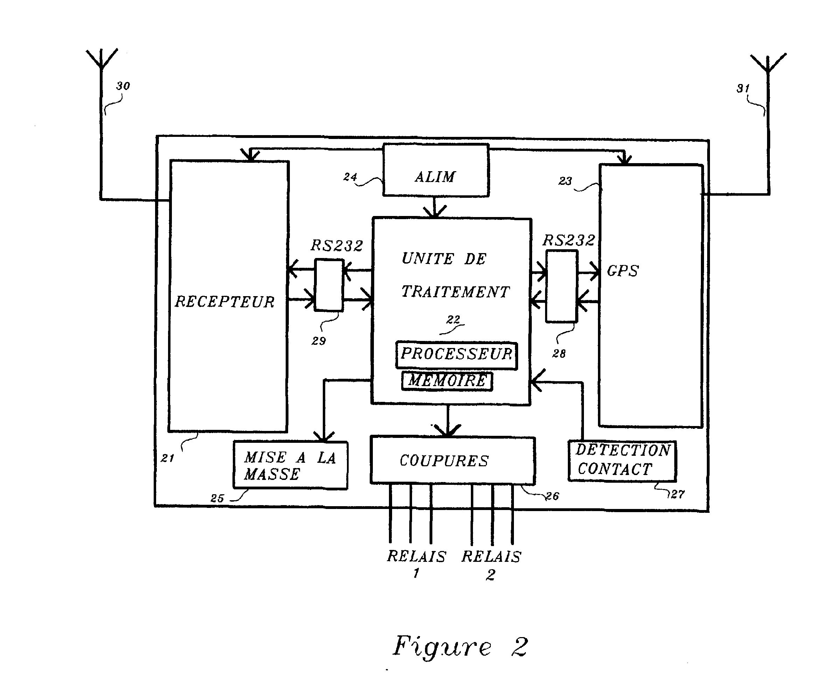

La figure 2 montre le schéma de principe d'un circuit de commande à distance 6 permettant le traitement d'informations reçues via le réseau radio avec des informations de localisation fournies par un récepteur GPS. Le circuit de commande se compose d'une unité de traitement 22, laquelle comporte un processeur (non représenté) et des moyens de stockage de l'information, tel que mémoire RAM ou EEPROM pour stocker les données qui sont reçues du serveur 2, mais également les informations qui sont produites localement dans le véhicule ou le matériel mobile. A cette fin, l'unité de traitement 22 communique avec un système récepteur 21 via une liaison série 29, de type synchrone ou asynchrone telle que RS232 par exemple. Le récepteur est connecté à une antenne de radiodiffusion 30. De la même manière, l'unité de traitement 22 communique suivant un protocole *National Marine Electronic Association* (NMEA) avec un système récepteur de type *Global Positioning System* (GPS) via une liaison série 28 qui peut être similaire à la précédente. Le récepteur GPS est connecté à une antenne spécifique 31 afin de recevoir les signaux satellites de localisation.

L'unité de traitement 22 est réalisée de façon à permettre le traitement simultané des informations reçues à distance par le réseau de radiodiffusion, mais également celles qui sont produites localement. Celles-ci comprennent, outre les informations de localisation générées par le récepteur GPS, des informations additionnelles telles que celles générées par un détecteur de contact 27 (sur la figure), un capteur kilométrique, voire des capteurs d'informations relatives au au fonctionnement de certains organes du véhicule.

Le processeur de l'unité de traitement 22 permet de traiter les informations qui sont simultanément produites en local par les différents détecteurs, tel que le détecteur de contact 27 ou encore l'information de localisation fournie par le récepteur GPS 23, avec les messages de commande qui sont reçus par le récepteur 21, et ce, en vue de produire des signaux de commandes destinés à activer des organes fonctionnels du véhicule ou du matériel mobile. A cet effet, un circuit de coupure 26 permet l'activation ou la désactivation d'un relais placé dans le circuit de démarrage par exemple.

L'unité de traitement comporte les éléments techniques qui permettent de réaliser une architecture de microprocesseur, comportant des unités de stockage et d'entrée-sortie. Une telle architecture est bien connue de l'homme du métier et ne sera pas décrite plus avant . De la même manière, le dispositif de commande à distance comporte un circuit d'alimentation en courant 24 qui permet de fournir l'énergie électrique nécessaire au fonctionnement du système. Un circuit de mise à la masse 25 est commandé par l'unité de traitement et peut être utilisé pour activer tout signal lumineux ou sonore, ou encore pour provoquer le fonctionnement d'un organe en mode dégradée.

Dans un mode de réalisation particulier, le message de commande est reçu via un réseau de type « pager » . Comme cela est connu de l'homme du métier, le réseau de type pager est basé sur la diffusion d'un signal radio qui comprend un certain nombre de messages ou « pages » qui sont assemblés et cryptés. Dans le réseau ERMES, par exemple, qui est celui utilisé en France, un signal radio est diffusé sur tout le territoire par un opérateur de télédiffusion à intervalles de douze secondes. Les dispositifs de réception de ces messages - communément désignés par le vocable « pager » - détiennent une clé de décryptage qui leur permet de traiter le signal radio et d'extraire le message particulier qui leur correspond qui est normalement affiché sur un écran à cristaux liquides.

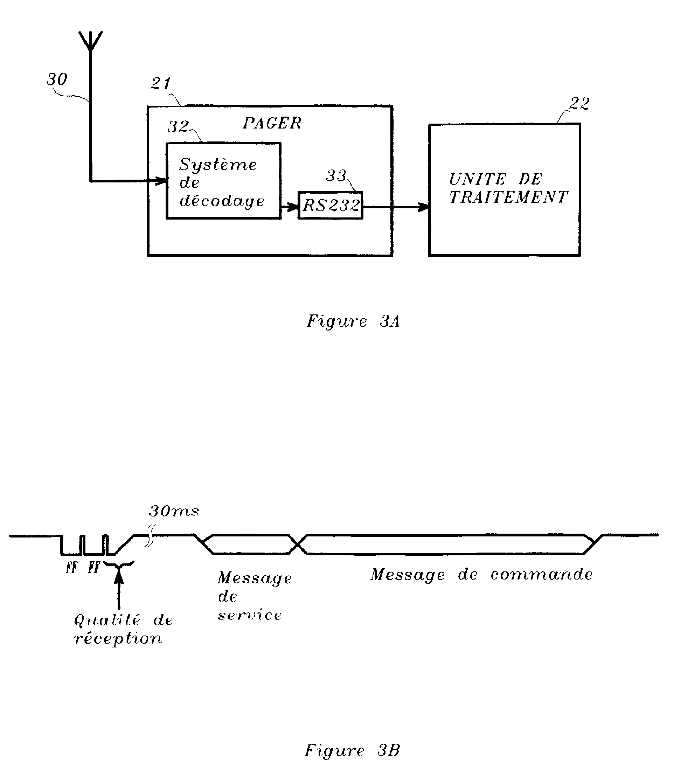

La figure 3A décrit une architecture de récepteur pager modifiée pour permettre l'adaptation de la présente invention et constituer le récepteur 21. Aucun dispositif d'affichage ou de buzzer n'est utilisé dans ce récepteur pager. Le signal radio transmis toutes les douze secondes est reçu par l'antenne 30 et transmis au récepteur 21. Le récepteur 21 comporte un circuit synthétiseur (non représenté) permettant de générer un message numérique qui est ensuite décrypté par un système ou circuit de décodage 32 qui est associé à une clé de décryptage afin d'extraire le message qui correspond à ce récepteur particulier. A cette fin, le circuit de décodage 32 fournit, en direction de l'unité de traitement 22, via un convertisseur série 33 tel que RS232, une trame qui sera à présent décrite en relation avec la figure 3B.

Dans un mode de réalisation particulier, la trame fournie par le récepteur 21 comporte un message de service qui suit, après un période de 30 millisecondes, trois octets de démarrage de trames. Les deux premiers octets (FF) sont destinés à des fins de synchronisation et le troisième octet porte une valeur qui est représentative de la qualité de réception du signal radio et qui fera l'objet d'un traitement spécifique qui sera décrit plus loin. Le message de service comporte notamment l'heure d'émission du message ainsi que d'autres informations optionnelles, et notamment une information de longueur du message de commande qui peut être utilisé à des fins de vérification.

A la suite du message de service, l'unité de traitement 22 reçoit, de la part du lien série 29, un message de commande destiné à activer ou désactiver les organes fonctionnels du véhicule ou du matériel mobile.

L'unité de traitement 22 reçoit un message de commande émanant du récepteur qui présent le format qui va être à présent décrit.

Un premier champ est destiné à porter un numéro d'ordre attribué aux messages de commande permettant à l'unité de traitement 22 de vérifier le bon séquencement de réception des différents messages de commande ou d'activation/ désactivation.

Un second champ est destiné à véhiculer une valeur qui, lorsqu'elle est décodée par l'unité de traitement 22, est spécifiquement dédiée à la commande d'organes fonctionnels dans un véhicule automobile. Ce second champ indique à l'unité de traitement 22 si la coupure, au moyen des circuits de coupure 26 représentés dans la figure 2, est autorisée lorsque le moteur est en marche, ce qui pourra résulter, notamment, de la détection de contact au moyen du détecteur 27.

Un troisième champ est destiné à porter une valeur qui, lorsqu'elle est décodée par l'unité de traitement 22, autorise ou non le blocage du véhicule ou du matériel, par l'activation des relais, en cas de mauvaise réception du signal radio. Comme on le verra ci-après, le troisième octet qui est contenu dans la trame produite par le récepteur 21 fournit une valeur qui fait l'objet d'un traitement par l'unité de traitement 22 de manière à obtenir une estimation de la qualité du signal. Le décodage de ce troisième champ est particulièrement intéressant en terme de sécurité et de confort puisqu'il permet à un utilisateur, qui a verrouillé son véhicule en provoquant l'activation des relais de coupure par exemple, de pouvoir utiliser son véhicule même en cas de réception radio dégradée. En effet, en l'absence d'un tel mécanisme, le véhicule resterait verrouillé jusqu'à la réapparition de conditions de réception radio minimales.

Un quatrième champ est destiné à porter une valeur qui, lorsqu'elle est décodée par l'unité de traitement 22, permet la désactivation définitive du système, c'est-à-dire met l'unité de traitement dans un état logique qui inhibe la prise en compte des messages qui suivent .

Le message de commande comporte un cinquième champ qui définit le ratio FLEX/ERMES qui est utilisé par le réseau de communication. D'une manière préférentielle, ce champ comporte deux parties : une première partie que l'unité de traitement décode comme représentatif d'un changement de la valeur du ratio, suivi d'une seconde valeur qui définit précisément le nouveau ratio. Dans un mode de réalisation préféré, l'unité de traitement effectue un calcul sur la valeur du troisième octet qui est, comme on l'a indiqué, représentatif de la qualité de réception du signal. L'unité de traitement 22 effectue ensuite une intégration de la valeur instantanée de la mesure de cette qualité à chaque période de 12 secondes. Cette première intégration est pondérée par la valeur du ratio FLEX/ERMES de manière à obtenir une mesure fine, mais moyennée de la qualité de réception du signal radio. Cette valeur fine pourra alors être utilisée dans les mécanismes de décodage de la trame, et notamment lors du décodage du second champ qui autorise l'activation des relais en cas de mauvaise réception. Ainsi, le dispositif de commande reste opérationnel en cas de modification dans les rapports des trames FLEX ou ERMES par l'opérateur.

Le message de commande comporte un sixième champ qui définit l'action à effectuer. Dans un mode de réalisation, l'unité de traitement peut commander l'activation ou la relaxation de deux relais distincts en fonction de la valeur portée par ce sixième champ.

Un septième champ est destiné à porter une information qui définit la date et l'heure de début d'une action programmée à l'avance, sur l'un des organes du véhicule ou du matériel mobile. Un huitième champ complète cette information en définissant une date et une heure de fin de l'action programmée à l'avance.

Un neuvième champ est destiné à véhiculer une valeur qui, lorsqu'elle est décodée par l'unité de traitement 22, provoque la réactivation des éléments de coupure 26 en cas de désactivation permise par le décodage du troisième champ dans une condition de réception dégradée. Ainsi, si l'utilisateur le souhaite, le véhicule peut être automatiquement re verrouillé dès lors que les conditions de réception redeviennent optimales afin d'accroître la sécurité.

Un dixième champ est destiné à porter un code géographique qui sera décodé en relation avec un mécanisme de localisation utilisé en relation avec le récepteur GPS 23. Dans un mode de réalisation particulier, le dixième champ porte les coordonnées x,y de deux points permettant de définir une zone rectangulaire dans laquelle une action sera provoquée par l'unité de traitement 22. L'envoi de plusieurs messages de commande permet de stocker successivement un ensemble de couples de coordonnées, de manière à définir autant de zones qui correspondront à des actions provoquées par l'unité de traitement 22. Ainsi le système permet la transmission, depuis le serveur 2 vers l'unité de traitement 22, d'un zonage qui peut être stocké dans l'unité de traitement 22 et servir à des fins de commande de l'activation ou désactivation des organes fonctionnels du véhicule.

Des champs supplémentaires peuvent être aménagés de manière à provoquer des affichages spécifiques permettant d'attirer l'attention des tiers, par exemple un clignotement lent pour signaler à l'utilisateur une coupure imminente.

L'unité de traitement reçoit également une information de localisation, sous forme d'une latitude et d'une longitude, via l'élément 28 de liaison RS232 connecté au récepteur GPS. Cette communication est faite suivant le protocole NMEA qui ne sera pas décrite plus avant, mais qui permet l'échange d'informations entre le récepteur GPS 23 et l'unité de traitement 22 en vue du stockage des données de localisation dans la mémoire de stockage de cette dernière. Cette unité de stockage sert à stocker des informations définissant un jeu de zones géographiques destinées à correspondre avec des valeurs prédéfinies portées par le dixième champ mentionné ci-dessus.

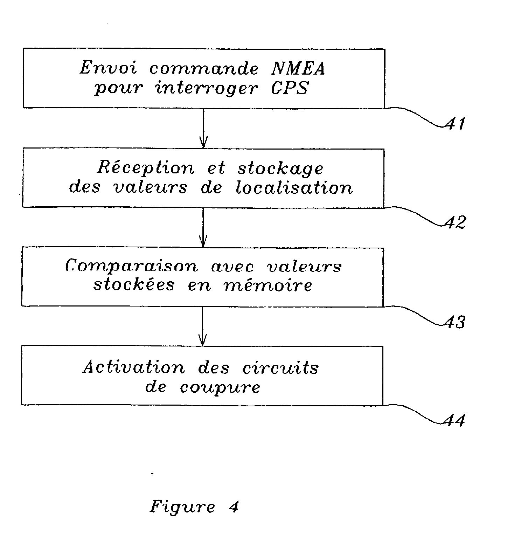

La figure 4 illustre le procédé permettant la communication de l'unité de traitement 22 avec le récepteur GPS 23 et le traitement des informations de localisation au sein de cette unité.

Le procédé comporte une première étape 41, au cours de laquelle l'unité de traitement 22 interroge, à intervalle régulier, le récepteur GPS au moyen de la commande NMEA appropriée, par exemple une commande PDOP, laquelle va provoquer le renvoi d'une trame par défaut via la liaison RS232.

Dans une étape 42 suivante, le GPS retourne les valeurs de position du véhicule ou du matériel mobile, lesquelles sont réceptionnées et stockées dans les moyens de stockage de l'unité de traitement 22.

L'unité de traitement 22 compare, dans une étape 43, les coordonnées reçues du récepteur GPS, avec des valeurs correspondant aux zones d'activations reçues dans le dixième champ de la trame, et stockées en mémoire.

Puis, dans une étape 44, l'unité de traitement provoque, le cas échéant, l'activation ou non des organes fonctionnels du véhicule ou du matériel mobile, au moyen par exemple des circuits de coupure 26.

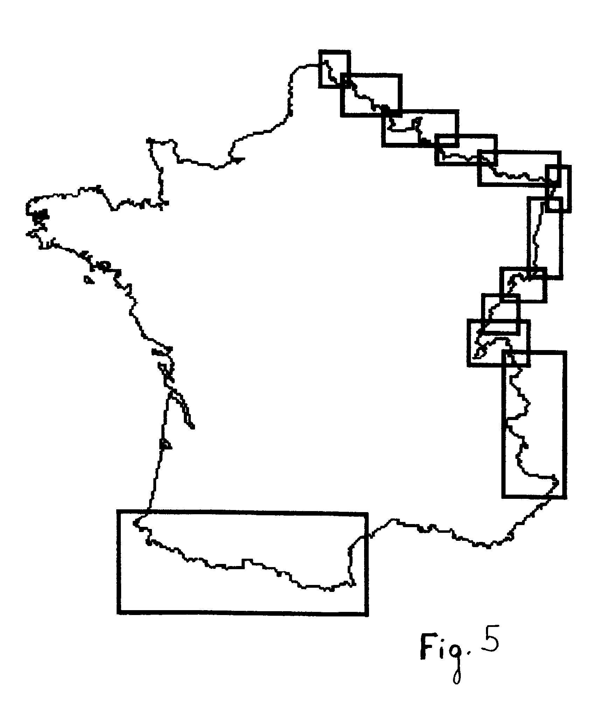

La figure 5 illustre une série de zones qui peuvent être stockées en mémoire de l'unité de traitement 22 de manière à assurer que le véhicule ne pénètre pas dans une zone frontalière.

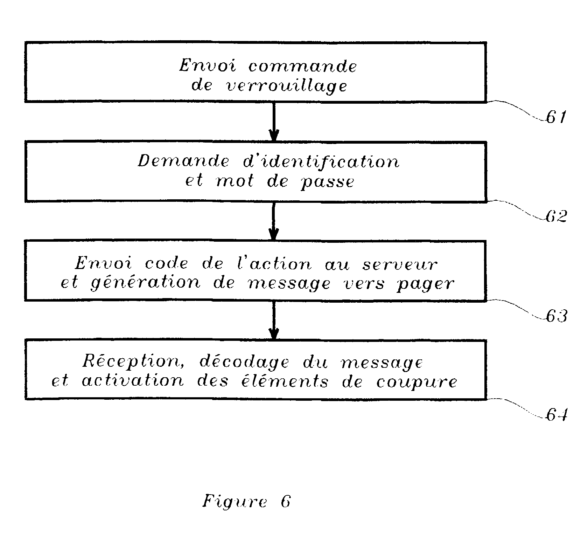

La figure 6 montre le protocole qui permet à un utilisateur de provoquer le vérouillage sécurisé de son véhicule, pendant une durée programmée à l'avance.

Dans une première étape 61, l'utilisateur envoie une commande de verouillage au serveur 2 au moyen d'un réseau téléphonique ou de télécommunications. A cet effet, l'utilisateur peut employer un téléphone cellulaire, de type GSM, et appeler un service spécifique qui provoquera la radiodiffusion d'un message destiné à être reçu par le récepteur qui est contenu dans le véhicule de l'utilisateur.

Dans une seconde étape 62, le serveur demande à l'utilisateur d'introduire, éventuellement après un premier code client, un mot de passe qui est transmis au moyen des tonalités DTMF au réseau à des fins de vérification.

En cas de concordance entre le mot de passe introduit par l'utilisateur et celui enregistré après du serveur, ce dernier établit le dialogue avec l'utilisateur qui peut alors introduire un certain nombres de codes d'action en fonction de situation d'espèce.

Pour la clarté des propos on supposera que l'utilisateur introduit un code définissant une position parking de haute sécurité, c'est à dire provoquant le blocage de certaines fonctions essentielles, parallèlement au verrouillage des portes.

Dans l'étape 63, le code de l'action envisagée - à savoir la position parking de sécurité - est transmise au serveur qui génère automatiquement un message destiné à être diffusé par le réseau FLEX ou ERMES.

Dans l'étape 64, le message est reçu par le dispositif de commande à distance, qui le décode et provoque l'activation des éléments de coupures 26 correspondants. Ce message peut être reçu avec des options par défaut, notamment au regard du contenu du troisième champ, de manière à pouvoir assurer à l'utilisateur qu'il pourra utiliser son véhicule même en cas de mauvaise réception du signal radio.

La transmission du signal radio par l'intermédiaire du réseau FLEX ou ERMES présente l'avantage de pouvoir organiser une flotte de récepteurs qui pourront, le cas échéant, recevoir un même message commun. A cet effet un message pourra être transmis au sein du signal radio, qui sera décodé par tous les circuits de décodage des systèmes de la flotte. Ainsi, l'unité de traitement 22 de chacun des dispositif appartenant à la flotte, peut recevoir, en une seule opération, le même message de commande qui sert à programmer les fonctions de commande ou d'activation/désactivation.

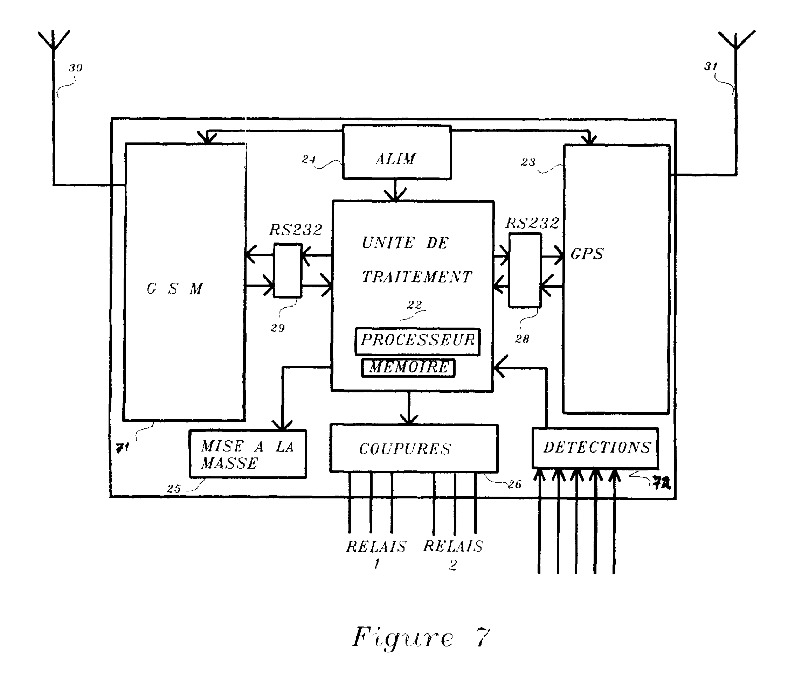

La figure 7 montre un mode de réalisation de l'invention particulièrement avantageux puisqu'il permet, à moindre coût, de réaliser une véritable communication bidirectionnelle entre le dispositif situé à l'intérieur du véhicule ou du matériel mobile, et un réseau informatique. Cette communication est basée sur l'emploi d'un modem GSM 71 qui est configuré de manière à utiliser la voie de service SMS (short message service) afin de transmettre les messages de commande à destination de l'unité de traitement 22. Comme on le sait, le réseau de signalisation Short Message Service n'est utilisé, d'ordinaire, qu'à des fins de signalisation pour les téléphones cellulaires ou pour convoyer des messages destinés à être affichés sur un écran à cristaux liquides.

Le récepteur GSM peut tirer avantage de la plupart des circuits modems GSM existants sur le marché, et notamment comportant les entrées-sorties que l'homme du métier connaît. Plus particulièrement, le modem GSM communique avec l'unité de traitement au moyen d'une interface série 29 de type RS232, telle que celle décrite en relation avec la figure 2. Dès la mise sous tension et l'initialisation du modem GSM effectuée, celui-ci peut échanger des informations au travers des liaisons RS232. Cet échange démarre en général par l'envoi, par l'unité de traitement 22, d'une requête Hayes « AT + CPIN = xxxxx » destinée à transmettre le code d'identification utilisateur (code PIN) au modem. L'unité de traitement 22 est alors prête à dialoguer avec le modem GSM. A ce moment le modem se met en relation avec le réseau pour s'identifier. Dès cette identification faite, les messages SMS qui sont disponibles sont transmis au modem GSM, lequel peut alors les retransmettre à l'unité de traitement 22 via la liaison série 29 et inversement, l'unité de traitement peut envoyer au modem GSM des messages à transmettre par l'intermédiaire de la voie de service SMS.

On constate ainsi que, d'une manière économique, le dispositif de commande dispose à présent d'une liaison bidirectionnelle permettant l'échange de messages de 144 caractères. Ces messages peuvent fort opportunément servir au transport d'un message de commande, présentant un format similaire à celui décrit précédemment dans le cas du réseau FLEX/ERMES.

Le premier champ, qui est toutefois optionnel, peut servir au transport du numéro d'ordre qui est attribué au message, à des fins de vérification par l'unité de traitement.

Un second champ est destiné à être décodé par l'unité de traitement 22 de manière à autoriser ou non le verrouillage des organes fonctionnels du véhicule, lorsque le moteur est détecté comme étant en marche, ce qui pourra être détecté, notamment au moyen d'un détecteur de contact tel que celui représenté à la figure 2 (détecteur 27).

Un troisième champ est destiné, comme précédemment, à porter une valeur qui, lorsqu'elle est décodée par l'unité de traitement 22, autorise ou non le blocage du véhicule ou du matériel, par l'activation des relais, en cas de mauvaise réception du signal radio. A cet effet, l'unité de traitement 22 demande au modem GSM 71, au moyen de la commande AT+CSQ, une mesure instantanée de la qualité de réception du signal radio. Ensuite, l'unité de traitement effectue une intégration sur la valeur instantanée de celle-ci, et en dérive une valeur moyenne qui est comparée à une valeur seuil prédéfinie stockée en mémoire. En dessous de la valeur seuil, l'unité de traitement commandera le déverrouillage automatique des organes fonctionnels du véhicule de manière à libérer celui-ci du blocage dont il était auparavant l'objet.

Un quatrième champ, optionnel, est destiné à porter une valeur qui, lorsqu'elle est décodée par l'unité de traitement 22, permet la désactivation définitive du système. L'unité de traitement est mis dans un état logique qui inhibe la prise en compte des messages qui suivent .

Le message de commande transmis par l'interface RS232 29 comporte avantageusement un cinquième champ qui peut servir a véhiculer une commande qui permet à un serveur 2, ou à un utilisateur via un serveur 2, de requérir l'état du système GPS, lorsque celui-ci est disponible et a été reconnu par l'unité de traitement comme étant opérationnel. Typiquement, une application directe de ce cinquième champ permet la demande de localisation du véhicule par l'utilisateur.

Le message de commande comporte un sixième champ qui définit, comme dans le cas du réseau « pager », l'action à effectuer. Dans un mode de réalisation particulier, l'unité de traitement peut commander l'activation ou la relaxation de deux relais distincts en fonction de la valeur portée par ce sixième champ.

Un septième champ est destiné à porter une information qui définit la date et l'heure de début d'une action programmée à l'avance, sur l'un des organes du véhicule ou du matériel mobile. Un huitième champ complète cette information en définissant une date et une heure de fin de l'action programmée à l'avance.

Un neuvième champ est destiné à véhiculer une valeur qui, lorsqu'elle est décodée par l'unité de traitement 22, provoque la réactivation des éléments de coupure 26 en cas de désactivation permise par le décodage du troisième champ dans une condition de réception dégradée. Ainsi, si l'utilisateur le souhaite, le véhicule peut être automatiquement verrouillé à nouveau, dès lors que les conditions de réception redeviennent optimales afin d'accroître la sécurité.

Comme dans le cas du pager adapté au réseau FLEX/ERMES, un dixième champ peut convoyer une information destinée à définir une zone géographique qui sera associée à une action particulière commandée par l'unité de traitement. Ainsi, l'envoi successif de plusieurs messages de commande permet de recevoir et de constituer une base de données stockée par l'unité de traitement permettant de définir un comportement du véhicule.

Comme pour le pager, des champs supplémentaires peuvent être aménagés afin de tirer avantage de la liaison SMS qui a été établie entre le réseau et le véhicule.

Un onzième champ est destiné à permettre au centre d'appel SMS de l'opérateur par défaut, de transmettre un second numéro d'appel d'un autre centre SMS qui sera stockée dans la mémoire de l'unité de traitement 22, et qui sera utilisé lors des prochaines communications. Cette disposition est particulièrement utile lorsque le véhicule est destiné à traverser un territoire couvert par des opérateurs différents.

Un douzième champ est destiné à porter le numéro de destination des messages. Ceci permet à l'unité de traitement d'envoyer des messages qui seront convoyés et transmis sur un téléphone mobile cellulaire, sur un terminal d'ordinateur ou tout autre équipement final.

Un treizième champ est destiné à requérir l'envoi d'informations séquencées dans le temps. Dès la réception de cette commande, l'unité de traitement 22 effectue un échantillonnage des informations désirées, par exemple les coordonnées x,y à intervalle de temps régulier, et stocke ces informations dans sa mémoire interne. L'unité de traitement 22 peut ensuite envoyer un ou plusieurs message à un destinataire défini dans le douzième champ pour reporter ces informations.

Un quatorzième champ est destiné à requérir l'envoi d'informations séquencées dans l'espace. Dès la réception de cette commande spécifique, l'unité de traitement 22 effectue un échantillonnage des informations de localisation, de manière à déterminer lorsque le véhicule a parcouru une certaine distance. Le report d'une information kilométrique est ainsi possible vers un destinataire, typiquement celui dont le numéro d'appel est défini dans le deuxième champ.

Un quinzième champ est spécialement utilisé en relation avec les exigences en matière de sécurité. En effet, il est utilisé pour véhiculer le numéro de l'appelant fourni par le centre SMS, et qui peut ainsi être stocké dans la mémoire de l'unité de traitement 22. Un mécanisme de vérification est alors mis en oeuvre dans cette dernière, afin de comparer ce numéro de l'appelant contenu dans le quinzième champ avec un numéro préalablement stocké, en général le numéro d'appel du modem GSM, tel que reçu dans le douzième champ indiqué ci-dessus. Ainsi, l'unité de traitement peut vérifier facilement la concordance des numéro d'appelant et d'appelé pour accroître la sécurité du système.

Le format du message de commande qui est transmis par la voie de service SMS vers l'unité de traitement 22 est destiné à coopérer avec un format de message que cette même unité de traitement utilise pour transmettre des informations à un terminal d'ordinateur via la voie de service SMS.

Ce format comporte l'identifiant du système - à savoir le numéro international de la carte SIM qui est attribué d'une manière unique - la date et l'heure de l'appel, et un champ destiné à recevoir des informations de localisation, par exemple x et y. Un champ supplémentaire peut servir à transmettre l'état de fonctionnement du récepteur GPS pour reporter cette information au serveur 2, ou à un utilisateur communicant avec ce serveur.
D'autres informations provenant de détecteurs spécifiques, tels que les détecteurs 72 représentés sur la figure 7, peuvent être organisées dans des champs spécifiques, notamment le kilométrage parcouru, si le véhicule est en marche ou à l'arrêt etc... Ces informations sont transmises depuis l'unité de traitement 22 jusqu'au serveur 2 dans des champs additionnels contenus dans des messages SMS.

De cette manière, une grande maîtrise sur le fonctionnement est rendue possible puisqu'il est possible d'être informé à distance de l'état et la position du véhicule ou du matériel mobile. En particulier, les zones qui sont définies dans la mémoire du dispositif de traitement peuvent être utilisées pour déterminer si le véhicule pénètre dans une des zones correspondantes, et conditionner un comportement spécifique ainsi que l'envoi d'un message vers un numéro prédéfini. Dans un mode de réalisation, le comportement vise à verrouiller certains organes fonctionnels du véhicule lors de l'entrée dans une zone non souhaitée au moyens de organes de coupure 26. Ainsi l'on peut éviter qu'un véhicule ne traverse une frontière. En revanche, dans un autre mode de réalisation, l'unité de traitement 22 génère un message vers un numéro prédéfini lors de l'entrée du véhicule dans une zone prédéfinie, ce qui peut être utile dans le cas d'un transport ou une livraison de marchandises.

Comme on le voit, une grande souplesse de fonctionnement est permise, et d'une manière très économique, puisque le modem GSM ne communique que via la voie de service SMS. Il est à noter que l'architecture de la figure 2 est directement utilisable en l'absence d'un détecteur de type GPS, ce qui est le cas lorsque le système est destiné à servir à contrôler la sécurité d'un immeuble.

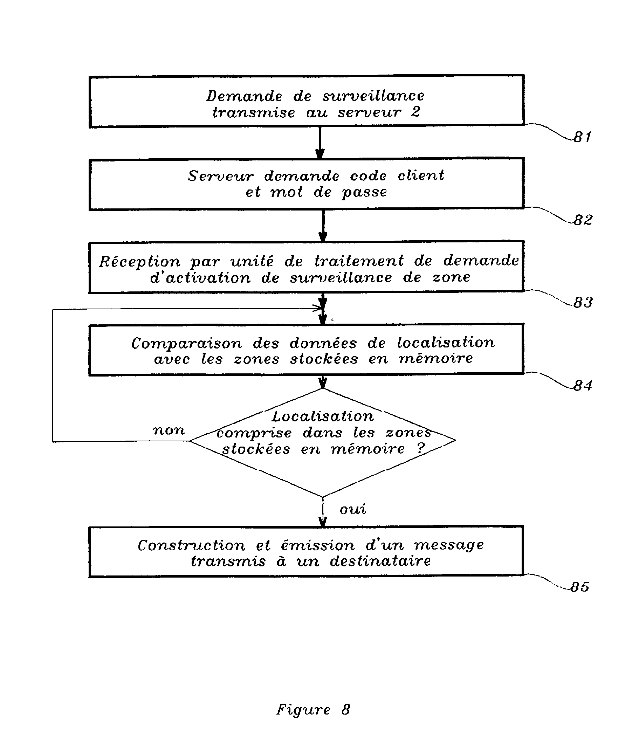

La figure 8 montre un exemple de protocole permettant de tirer avantageusement partie de dispositif de commande qui vient d'être décrit.

Dans une étape 81, un utilisateur appelle un centre serveur 2, pour requérir une surveillance du véhicule au sein d'une zone déterminée. A cette

Dans une seconde étape 82, le serveur 2 demande à l'utilisateur d'introduire, éventuellement après un premier code client, un mot de passe qui est transmis au moyen des tonalités DTMF au réseau à des fins de vérification.

En cas de concordance, le serveur établit un dialogue avec l'utilisateur de manière à lui permettre de communiquer sa requête. On suppose par exemple, que l'utilisateur sollicite la surveillance du véhicule pour que celui-ci ne sorte pas du territoire français. A cet effet, les zones frontalières sont successivement transmises à l'unité de traitement 22 au moyen de messages SMS ou, dans un autre mode de réalisation, un code caractéristique de la zone à couvrir est simplement transmise, par exemple - 33 - lequel code sera décodé par l'unité de traitement de manière à correspondre aux zones frontalières, telle que représentées sur la figure 5.

Dans une étape 83, l'unité de traitement reçoit un message qui correspond à la commande d'activation de surveillance dans une zone déterminée.

A partir de cet instant, l'unité de traitement 22, qui reçoit périodiquement les informations de localisation émanant du récepteur GPS via la liaison série RS232, compare celles-ci avec les valeurs stockées dans sa mémoire correspondant aux zones frontalières à surveillées.

L'étape 84 correspond à un test pour déterminer si la valeur courant de la localisation du véhicule correspond à une des valeurs définies comme étant à surveiller.

Dès lors que le véhicule pénètre dans une des zones prédéfinies, le test de l'étape 84 aboutit, ce qui provoque, lors d'une étape 85, la construction et l'émission d'un message qui est transmis au destinataire prédéfini via la voie de service SMS, de manière à informer le propriétaire légitime de la position précise du véhicule.

Dans un mode de réalisation préféré, le message est transmis à un opérateur automatique de manière à permettre la génération d'un autre message contenant une commande de verrouillage du véhicule qui est transmise à l'unité de traitement 22 afin de bloquer le véhicule. Dans d'autres modes de réalisation, une commande de fonctionnement en mode dégradée pourra être envisagée. Dans la perspective de l'organisation d'un service de transport, il devient possible de prévenir automatiquement de l'arrivée d'un transporteur au moyen d'un message qui est transmis par la voie de service, comme cela a été décrit.

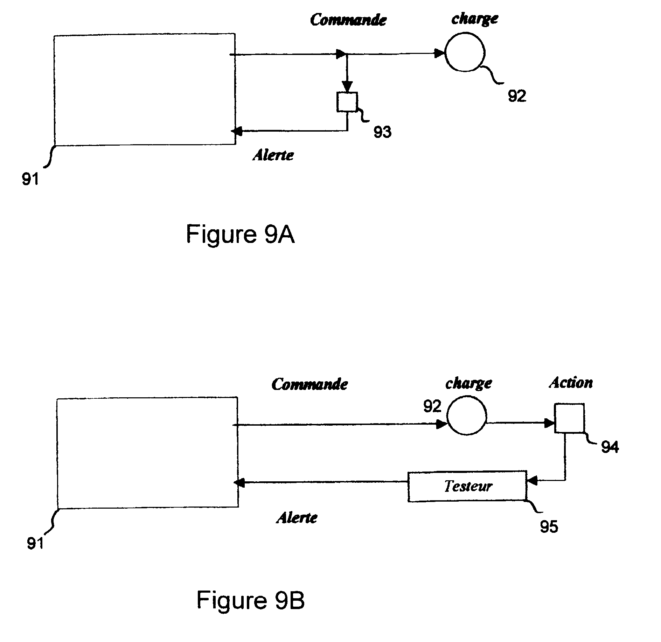

Les figures 9A et 9B illustrent un dispositif de commande de processus 91 qui peut être utilisé à des fins domotiques. Ainsi la voie de service SMS est utilisé par le dispositif qui est décrit précédemment, pour commander l'activation d'une charge. Inversement, l'unité de traitement 22 qui est utilisé dans ce cas, peut coopérer avec des moyens de détection. Dans les deux cas l'établissement de la liaison bidirectionnelle entre l'unité de traitement 22 (non représentée sur les figures 9A et 9B) et un serveur permet de transmettre à distance des commandes de charge 92, qui sont ensuite suivie de l'envoi d'un accusé de réception à l'utilisateur.

Deux types d'accusés de réception, de premier et second niveau, sont permis.

La situation de la figure 9A correspond à un accusé de réception de premier niveau. Dans ce cas, une commande de charge est reçue par l'unité de traitement via un message de commande qui est transmis par la voie de service SMS. Puis l'unité de traitement décode la commande et génère les signaux d'activation correspondants sur les éléments de coupure 26 (qui en l'espèce sont des éléments de mise en charge). L'activation de cette mise en charge peut être ramenée par une boucle, via un élément d'adaptation 93 représenté sur la figure 9A, et réintroduit au niveau du circuit de détection 72 de la figure 7. Ainsi l'unité de traitement peut effectuer un test de premier niveau sur la commande qu'elle a décodée et qui a résulté dans la mise en charge.

La situation de la figure 9B correspond à l'envoi d'un message avec un accusé de réception de second niveau. Dans cette situation, la mise en charge provoquée par la réception du message de commande via la couche de service SMS résulte dans un effet (par exemple une mise en température) qui est directement mesuré par un capteur 94. Un élément testeur permet de réintroduire une grandeur électrique représentative de cet effet, par exemple de la température. Ainsi, l'unité de traitement 22 reçoit au niveau du circuit de détection 72 une information qui représente directement l'effet de la commande qu'il a décodée préalablement, et qu'il peut utiliser pour construire un message SMS qui sera retourné à l'utilisateur.

## Revendications

1. Dispositif de commande du fonctionnement d'un ou plusieurs organes fonctionnels d'un véhicule, d'un engin ou d'un matériel mobile, caractérisé en ce qu'il comporte :
- un système récepteur (21) de radiodiffusion afin de recevoir des messages de commande reçues à distance d'un serveur informatique (2) ;
- un système de réception de type Global Positioning System (GPS) fournissant une information de localisation qui est générée localement ;
- une unité de traitement (22) pour traiter lesdits messages de commande parallèlement aux informations de localisation générées par le dit système de réception GSM de manière à produire des signaux de commande d'activation ou de désactivation des dits organes fonctionnels.

2. Dispositif selon la revendication 1 caractérisé en ce que l'unité de traitement reçoit d'autres informations qui sont produites localement par des détecteurs ou des capteurs de fonctionnement de certains organes électriques ou mécaniques.

3. Dispositif selon la revendication 1 ou 2 dans lequel le dit système de réception est un récepteur pager, de type FLEX ou ERMES, qui reçoit à intervalle régulier un signal radio diffusé sur tout un territoire et véhiculant un ensemble de messages assemblés et cryptés et comportant un système de décodage permettant de décrypter et d'extraire un message de commande destiné à être transmis à ladite unité de traitement.

4. Dispositif selon la revendication 3 caractérisé par le fait que le message de commande qui est transmis à l'unité de traitement comporte un champ définissant la numérotation du message, un champ définissant l'action à effectuer sur un organe fonctionnel, un code portant la date et l'heure de début d'une action programmée et un code déterminant la date et l'heure de fin de programmation de l'action.

5. Dispositif selon la revendication 4 caractérisé en ce que l'unité de traitement effectue un traitement de la mesure de la qualité de réception du signal radio et provoque le déblocage des dits organes fonctionnels lorsque le résultat du traitement de la qualité descend en dessous d'une certaine valeur seuil.

6. Dispositif selon la revendication 5 caractérisé en ce que le traitement de la qualité du signal radio effectuée par l'unité de traitement utilise la valeur d'un ratio ERMES/FLEX, lequel est transmis dans un champ spécifique d'un message de commande.

7. Dispositif selon la revendication 4 caractérisé en ce que le dispositif est utilisé pour contrôler l'usage d'un véhicule et en ce que le format de la trame reçue par le réseau pager comporte une information décodée par l'unité de traitement pour commander le blocage des fonctions ou organes du véhicule dès que le moteur est arrêté, optionnellement avec d'autres effets tels que lumineux ou sonores.

8. Dispositif selon la revendication 1 ou 2 caractérisé en ce que l'unité de traitement communique avec un modem cellulaire de type GSM, lequel est configuré de manière à permettre la transmission et l'émission de messages de commandes via la voie de service dit Short Message Service (SMS).

9. Dispositif selon la revendication 8 caractérisé en ce que le message de commande qui est reçue par l'unité de traitement via la voie de service SMS comporte des informations permettant la numérotation du message, un code définissant l'action à effectuer, un code déterminant la date et l'heure de début de l'action, un code déterminant la date et l'heure de fin de programmation de l'action.

10. Dispositif selon les revendications 8 ou 9 caractérisé en ce que le format de la trame reçue par la voie de service SMS comporte une information décodée par l'unité de traitement pour commander le blocage des fonctions ou organes du véhicule dès que le moteur est arrêté, optionnellement avec d'autres effets tels que lumineux ou sonores.

11. Dispositif selon la revendication 10 caractérisé en ce que le modem GSM fournit une valeur de la mesure de la qualité de réception du signal radio à ladite unité de traitement, laquelle déclenche le déblocage automatique des fonctions ou organes du véhicule dès que cette valeur descend en dessous d'un seuil prédéfini

12. Dispositif selon la revendication 9 caractérisé par le fait que le format comporte un champ permettant de définir un second numéro d'appel d'un autre centre SMS.

13. Dispositif selon la revendication 9 caractérisé en ce que le format comporte un champ destiné à porter le numéro de destination des messages que l'unité de traitement devra appeler.

14. Dispositif selon la revendication 9 caractérisé en ce que le format comporte un champ destiné à requérir l'envoi d'informations séquencées dans le temps ou dans l'espace.

15. Dispositif selon la revendication 9 caractérisé en ce que le format transmis à l'unité de traitement comporte un champ indiquant le numéro de l'appelant d'ou provient le message reçu par l'unité de traitement à des fins de vérification et de validation des commandes reçues.

16. Dispositif de localisation d'un véhicule ou d'un matériel mobile, caractérisé en ce qu'il comporte :
- un système émetteur-récepteur (21) de radiodiffusion de norme GSM configuré pour établir une liaison bidirectionnelle via une voie de service SMS ;
- une unité de traitement permettant de recevoir une demande de localisation reçue via la voie de service SMS ;
- un système de réception de type Global Positioning System (GPS) fournissant une information de localisation à ladite unité de traitement (22);
ladite unité de traitement générant un message de service contenant l'information de localisation qui est ensuite transmis pour communication au système récepteur.

17. Procédé de verrouillage sécurisé d'un organe fonctionnel d'un véhicule ou d'un matériel mobile, comportant les étapes suivantes :
- envoi (61) par un utilisateur d'une demande de verrouillage sécurisé via un réseau téléphonique, par exemple GSM ;
- envoi sur demande du réseau, des codes d'identification client et d'un mot de passe au moyen de codes DTMF ;
- en cas de concordance des codes client et du mot de passe, transmission via un réseau pager de type FLEX ou HERMES ou via un réseau GSM en utilisant la voie de signalisation SMS, d'un message de commande destiné à une unité de traitement localisé dans le véhicule ou le matériel à verrouiller ;
- extraction et décodage du message au sein de ladite unité de traitement, et activation d'une commande de verrouillage dans le véhicule ou le matériel mobile .

18. Procédé de verrouillage sécurisé selon la revendication 17 caractérisé en ce que l'unité de traitement effectue une mesure de la qualité du signal de réception radio et, en cas de réception insuffisante, provoque automatiquement le déverrouillage du véhicule ou du matériel mobile.

19. Dispositif de commande à distance d'un processus automatique ou semi-automatique comportant une unité de traitement (22) communiquant avec un modem cellulaire conforme à la norme GSM qui est configuré de manière à permettre l'échange de messages de commande via une voie de service dite Short Message Service (SMS).

20. Dispositif anti-effraction d'immeuble comportant un dispositif de commande à distance selon la revendication 19.

21. Procédé d'activation ou de contrôle de processus automatique ou semi-automatique à distance avec la transmission multidirectionnelle d'informations du système sous contrôle vers un ou plusieurs sites, basé sur :
la prise en compte d'informations transmises par radiocommunication, leur reconnaissance, leur conversion, leur restitution de manière ponctuelle ou cyclique , leur couplage avec les informations temporelles transmises par le réseau et des états successifs du véhicule ou de l'appareillage sur lequel le dispositif est installé,
la récupération d'informations provenant du système sous contrôle ou des périphériques qui lui sont attachés (GPS, alarmes...) de manière ponctuelle ou cyclique, et leur transmission par radiocommunication vers un ou plusieurs sites,
caractérisé par l'utilisation d'informations émises à partir de téléphones filaires ou cellulaires, de minitels ou de terminaux informatiques associés à un modem, et transmises par un ou plusieurs réseaux de radiocommunication terrestres ou satellitaires à un ou une pluralité d'émetteurs-récepteurs, soit par l'intermédiaire d'un serveur de gestion, soit par un réseau de données tel qu'Internet, soit directement à partir de n'importe quel poste téléphonique relié au réseau filaire ou cellulaire.

22. Dispositif d'activation ou de contrôle selon la revendication 20, caractérisé par le fait qu'il permet d'agir sur le fonctionnement de tout véhicule ou appareillage, soit à l'insu de l'utilisateur dudit véhicule ou appareillage, soit en ayant porté à la connaissance de l'utilisateur l'activation prévue avant que celle-ci ne s'effectue ; ceci pour permettre à cet utilisateur d'agir en conséquence et de transmettre l'acquit des actions effectuées sur un ou plusieurs sites.
